# EUROPÄISCHE PATENTSCHRIFT

(11) **EP 0 691 260 B1**
(45) Veröffentlichungstag und Bekanntmachung des Hinweises auf die Patenterteilung: **25.02.1998**
(21) Anmeldenummer: 95108206.4
(22) Anmeldetag: 30.05.1995
(51) Int. Cl.: B62D 33/06, A47C 21/08

(54) **Liege für ein Fahrerhaus eines Nutz- oder Lastkraftwagens**
Bed for a cab of a lorry or a truck
Lit pour la cabine d'un véhicule commercial ou d'un camion

(30) Priorität: 24.06.1994 DE 4422121
(43) Veröffentlichungstag der Anmeldung: 10.01.1996
(73) Patentinhaber: DAIMLER-BENZ AKTIENGESELLSCHAFT, 70567 Stuttgart (DE)
(72) Erfinder: Brand, Oskar, D-71069 Sindelfingen (DE); Berthet, Alain, D-71101 Schönaich (DE)

(56) Entgegenhaltungen:
- DE-A- 1 580 388
- DE-A- 3 929 785
- DE-A- 4 032 381
- FR-A- 2 487 746
- US-A- 3 000 665

## Beschreibung

Die Erfindung betrifft eine Liege für ein Fahrerhaus eines Nutz- oder Lastkraftwagens, die hinter einem Fahrersitz und einem Beifahrersitz im Fahrerhaus angeordnet ist und an einem Frontbereich zwischen dem Fahrer- und dem Beifahrersitz eine schwenkbare Rückhaltesicherung für eine auf der Liege befindliche Person aufweist.

Eine solche Liege ist aus der DE 39 29 785 A1 bekannt. Die Liege erstreckt sich über die Breite des Fahrerhauses hinter dem Fahrersitz und dem Beifahrersitz. Um zu verhindern, daß eine auf der Liege befindliche Person bei einer ruckartigen Verzögerung des Nutzfahrzeuges zwischen dem Fahrersitz und dem Beifahrersitz nach vorne von der Liege herabfällt, ist die Liege mit einer Rückhaltesicherung versehen. Diese Rückhaltesicherung ist an der Vorderkante der Liege angeordnet und parallellogrammartig zwischen einer abgesenkten Ruheposition und einer nach oben ausgestellten Rückhalteposition verschwenkbar. Die Rückhaltesicherung ist gitterartig ausgebildet und weist mehrere Gitterstabteile auf, die mittels Drehlagern miteinander verbunden sind. Insgesamt sind sechs Drehlager vorhanden, um die parallellogrammartige Schwenkbewegung der Rückhaltesicherung zu ermöglichen.

Aufgabe der Erfindung ist es, eine Liege der eingangs genannten Art zu schaffen, die mit einer einfachen und kostengünstigen Rückhaltesicherung versehen ist.

Diese Aufgabe wird durch die Merkmale des kennzeichnenden Teils von Anspruch 1 gelöst.

In Ausgestaltung der Erfindung ist das Drehlager als Reiblager ausgebildet, das mit Endanschlägen für die Rückhalteposition und für die Ruheposition des Sicherungsbügels versehen ist. Dadurch ist es möglich, den Sicherungsbügel durch Reibkraft in den jeweiligen Endpositionen sowie in beliebigen Zwischenpositionen zu sichern. Da aufgrund des Reiblagers keine Arretierung gelöst werden muß, ist der Sicherungsbügel zudem mit einer Hand in einfacher Weise handhabbar.

In weiterer Ausgestaltung der Erfindung ist der Sicherungsbügel derart L-förmig abgewinkelt, daß ein freier Schenkel des Sicherungsbügels in der Rückhalteposition parallel zur Liegenoberfläche quer zu einer Mittellängsachse des Fahrerhauses ausgerichtet ist. Diese Form des Sicherungsbügels ist einfach und zweckmäßig.

In weiterer Ausgestaltung der Erfindung weist der Sicherungsbügel einen weiteren freien Schenkel auf, der in geringerem radialen Abstand zur Schwenkachse parallel zu dem ersten freien Schenkel ausgerichtet ist. Dadurch wird die Rückhaltefunktion des Sicherungsbügels weiter verbessert.

In weiterer Ausgestaltung der Erfindung sind die beiden freien Schenkel durch eine Querstrebe zu einem geschlossenen Rahmen miteinander verbunden. Der Rahmen bildet somit eine vergrößerte Rückhaltefläche für eine auf der Liege befindliche Person.

In weiterer Ausgestaltung der Erfindung ist der Sicherungsbügel mit einer Polsterung versehen. Dadurch wird die Verletzungsgefahr für eine auf der Liege befindliche Person verringert.

Weitere Vorteile und Merkmale der Erfindung ergeben sich aus den Unteransprüchen. Nachfolgend sind Ausführungsbeispiele der Erfindung beschrieben und anhand der Zeichnungen dargestellt sind.
- Fig. 1: zeigt eine Ansicht von vorne auf das Innere eines Fahrerhauses eines Lastkraftwagens, bei dem hinter einem Fahrer- und einem Beifahrersitz eine Ausführungsform einer erfindungsgemäßen Liege angeordnet ist, und
- Fig. 2: eine Ansicht ähnlich Fig. 1, bei der die Liege mit einer gegenüber der Rückhaltesicherung nach Fig. 1 modifizierten Rückhaltesicherung versehen ist.

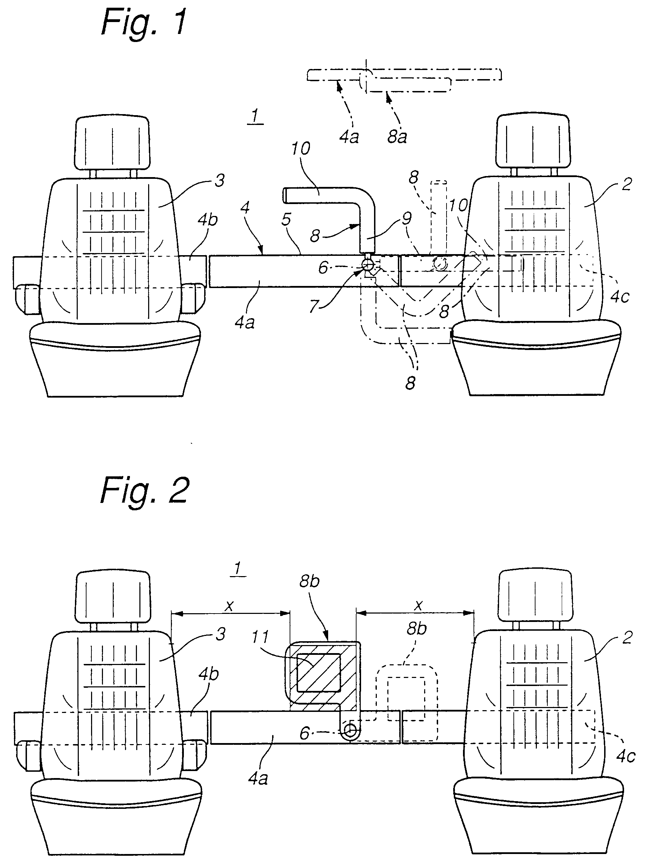

Ein Innenraum (1) eines Fahrerhauses nach Fig. 1 weist einen Fahrersitz (2) und in Abstand neben diesem einen Beifahrersitz (3) auf. Auf die Fahrtrichtung des Fahrerhauses des Lastkraftwagens bezogen hinter dem Fahrersitz (2) und dem Beifahrersitz (3) ist eine Schlafliege (4) vorgesehen, die aus drei Teilen (4a, 4b und 4c) besteht. Wird die Schlafliege (4) nicht benötigt, so ist sie an die Rückwand des Fahrerhauses in eine vertikale Position nach oben klappbar. An einer vertikalen Vorderseite der Schlafliege (4) - beim Ausführungsbeispel des mittleren Schlafliegenteiles (4a) - ist ein als Rückhaltesicherung für eine auf der Schlafliege (4) befindliche Person dienender Sicherungsbügel (8) um eine horizontale Schwenkachse (6) schwenkbar angeordnet. Die Schwenkachse (6) ist parallel zu einer Mittellängsachse des Fahrerhauses und ragt somit bei der Darstellung nach Fig. 1 lotrecht aus der Zeichenebene heraus. Zur Lagerung des Sicherungsbügels (8) ist ein Lagerzapfen vorgesehen, der in eine liegenfeste Lagerbuchse eingesetzt ist. Lagerzapfen und Lagerbuchse sind so aneinander angepaßt, daß der Lagerzapfen nur unter Überwindung von Reibungskraft in der Lagerbuchse drehbar ist. Die Reibungskraft ist jedoch lediglich so hoch, daß der Sicherungsbügel (8) noch in einfacher Weise von Hand verdreht werden kann. Das so gebildete Reiblager führt dazu, daß der Sicherungsbügel (8) in einer beliebigen Position stehen bleibt, sobald die Belastung durch eine Handhabung weggenommen ist. Mit dem Lagerzapfen des Reiblagers (7) drehfest und starr verbunden ist ein Schenkel (9), der radial zur Schwenkachse (6) von dem Lagerzapfen abragt. Der Sicherungsbügel (8) weist ein Rohrprofil auf und ist anschließend an den Schenkel (9) rechtwinklig umgebogen, wodurch sich ein weiterer, freier Schenkel (10) ergibt. Das rechtwinklig umgebogene Rohr des Sicherungsbügels (8) ist von einer Polsterung ummantelt. Der Sicherungsbügel (8) ist in der Zeichenebene gebogen, d.h. innerhalb einer Radialebene zur Schwenkachse (6). Diese radiale Liegeebene ist somit immer lotrecht zur Liegenoberfläche (5). Der rechtwinklig und damit L-förmig gebogene Sicherungsbögel (8) ist entsprechend den strichpunktiert und gestrichelt dargestellten Linien verschwenkbar.

Der Sicherungsbügel (8) ist mit voll ausgezogenen Linien in seiner Rückhalteposition dargestellt. Diese Position ist durch einen Endanschlag im Reiblager (7) definiert, so daß der Sicherungsbügel (8) im Gegenuhrzeigersinn nicht mehr weiter verdrehbar ist. Um auf die Schlafliege (4) aufzusteigen oder von dieser abzusteigen, wird der Sicherungsbügel (8) um 90° verschwenkt. Diese Ein- und Aussteigposition ist durch gestrichelte Linien dargestellt. Um die Schlafliege (4) an die Rückwand des Fahrerhauses hochklappen zu können, wird der Sicherungsbügel (8) im Uhrzeigersinn weiter verschwenkt (strichpunktierte Linien), bis er seine Ruheposition erreicht hat, die gegenüber der Rückhalteposition um 180° verdreht ist. In dieser Position ist die Schlafliege (4) an die Rückwand nach oben klappbar, was in Fig. 1 durch strichpunktierte Darstellungen und durch die Bezugszeichen (4a) und (8a) angedeutet ist.

In Fig. 1 ist ein weiteres Ausführungsbeispiel eines Sicherungsbügels (8) angedeutet (strichpunktierte Linien hinter dem Fahrersitz (2)), bei dem am Kreuzungspunkt der beiden Schenkel (9 und 10) ein zusätzliches Gelenk vorgesehen ist, mittels dessen der Sicherungsbügel (8) in eine gestreckte Position überführbar ist. Dadurch fluchtet der Sicherungsbügel (8) bei Nichtgebrauch mit der Liegenvorderseite und steht weder nach oben noch nach unten über die Schlafliege (4) heraus.

Bei weiteren Ausführungsbeispielen der Erfindung ist das Drehlager (7) für den Sicherungsbügel (8) entsprechend modifiziert, indem es als Rastlager mit verschiedenen Raststellungen ausgeführt ist.

Die Schwenkachse (6) ist an der Vorderseite der Schlafliege (4) so angeordnet, daß der Sicherungsbügel (8) in seiner Rückhalteposition sich etwa über den mittleren Bereich des Freiraumes zwischen dem Fahrersitz (2) und dem Beifahrersitz (3) erstreckt. Dadurch wird der freie Raum zwischen dem Sicherungsbügel (8) und dem Fahrersitz (2) bzw. dem Beifahrersitz (3) so weit reduziert, daß eine auf der Schlafliege befindliche Person nicht nach vorne heraus fallen kann. Der Abstand zwischen den Sicherungsbügel (8) und den beiden Sitzen (2 und 3) ist dabei jeweils geringer als 400 mm.

Ein Sicherungsbügel (8b) nach Fig. 2 entspricht in wesentlichen Teilen dem Sicherungsbügel (8) nach Fig. 1. Anordnung und Lagerung des Sicherungsbügels (8b) sind identisch mit denen des Sicherungsbügels (8). Auch der verbleibende freie Raum zwischen dem Sicherungsbügel (8b) und dem Fahrersitz (2) bzw. dem Beifahrersitz (3) entspricht in etwa dem Ausführungsbeispiel nach Fig. 1. In der Darstellung nach Fig. 2 ist der Abstand des Sicherungsbügels (8b) zum Fahrersitz (2) bzw. zum Beifahrersitz (3) jeweils mit (x) bezeichnet. Der Sicherungsbügel (8b) ist abhängig von den Abmessungen des jeweiligen Fahrerhauses so bemessen, daß der Abstand (x) maximal 400 mm beträgt. Die Form des Sicherungsbügels (8b) ist gegenüber dem Sicherungsbügel (8) geringfügig modifiziert. Der Sicherungsbügel (8b) weist die Form ähnlich einer Fahne auf, d.h. er weist ebenfalls einen radial von der Schwenkachse (6) abragenden Schenkel auf, von dem jedoch zwei zueinander parallele Schenkel abragen, die in unterschiedlichem radialen Abstand zur Schwenkachse (6) angeordnet sind. Die Enden der beiden abragenden Schenkel sind durch eine Querstrebe miteinander verbunden, so daß die verschiedenen Schenkel einen rechteckigen Rahmen bilden. Dadurch weist der Sicherungsbügel (8b) etwa P-Form auf. Durch diese Gestaltung ergibt sich eine vergrößerte Rückhaltefläche (11), die schraffiert dargestellt ist. In gestrichelter Darstellung ist die Ein- und Aussteigeposition des Sicherungsbügels (8b) dargestellt.

## Patentansprüche

1. Liege für ein Fahrerhaus eines Nutz- oder Lastkraftwagens, die hinter einem Fahrersitz (2) und einem Beifahrersitz (3) im Fahrerhaus angeordnet ist und an einem Frontbereich zwischen dem Fahrer- und dem Beifahrersitz (2, 3) eine schwenkbare Rückhaltesicherung für eine auf der Liege (4) befindliche Person aufweist,
**dadurch gekennzeichnet,**
daß die Rückhaltesicherung als einteiliger Sicherungsbügel (8, 8b) ausgebildet ist der zwischen einer Rückhalteposition und einer Ruheposition um eine zur Liegenoberfläche (5) parallele Schwenkachse (6) mittels eines Drehlagers (7) an der Liege (4) schwenkbar angeordnet ist und sowohl in der Rückhalteposition als auch in der Ruheposition von dem Drehlager (7) radial zur Schwenkachse (6) abragt.

2. Liege nach Anspruch 1,
**dadurch gekennzeichnet,**
daß das Drehlager als Reiblager (7) ausgebildet ist, das mit Endanschlägen für die Rückhalteposition und für die Ruheposition des Sicherungsbügels (8, 8b) versehen ist.

3. Liege nach Anspruch 2,
**dadurch gekennzeichnet,**
daß der Sicherungsbügel (8) derart L-förmig abgewinkelt ist, daß ein freier Schenkel (10) des Sicherungsbügels (8) in der Rückhalteposition parallel zur Liegenoberfläche (5) quer zu einer Mittellängsachse des Fahrerhauses ausgerichtet ist.

4. Liege nach Anspruch 3,
**dadurch gekennzeichnet,**
daß der L-förmig abgewinkelte Sicherungsbügel (8) durch zwei in ihrem Kreuzungspunkt über ein zusätzliches Gelenk miteinander verbundene Schenkel (9, 10) gebildet ist, mittels dessen der Sicherungsbügel (8) in eine gestreckte Position überführbar ist.

5. Liege nach Anspruch 2,
**dadurch gekennzeichnet,**
daß der Sicherungsbügel (8b) einen weiteren freien Schenkel aufweist, der in geringerem radialen Anstand zur Schwenkachse (6) parallel zu dem ersten freien Schenkel ausgerichtet ist.

6. Liege nach Anspruch 5,
**dadurch gekennzeichnet,**
daß die beiden freien Schenkel durch eine Querstrebe zu einem geschlossenen Rahmen miteinander verbunden sind.

7. Liege nach einem der vorhergehenden Ansprüche,
**dadurch gekennzeichnet,**
daß der Sicherungsbügel (8, 8b) mit einer Polsterung versehen ist.

8. Liege nach Anspruch 7,
**dadurch gekennzeichnet,**
daß der Sicherungsbügel (8, 8b) aus einem Rohrprofil hergestellt ist, das mit der Polsterung ummantelt ist.

## Claims

1. A berth for a driver's cab in a utility or heavy goods vehicle which is positioned behind a driver's seat (2) and a passenger seat (3) in the driver's cab and has a pivoting retaining safety device for a person located on the berth (4) in a front area between the driver's and the passenger seats (2, 3),
**characterised in that**,
the retaining safety device is designed as a one-piece safety bracket (8, 8b) which can be pivoted between a retaining position and a home position about a pivot point (6) parallel to the surface (5) of the berth by means of pivot bearing (7) on the berth (4) and which extends radially from the pivot bearing (7) to the pivot point (6) in both the retaining position and the home position.

2. A sleeper's berth in accordance with Claim 1,
**characterised in that**,
the pivot bearing is designed in the form of a friction bearing (7) which is fitted with end stops for the retaining position and the home position of the safety bracket (8, 8b).

3. A sleeper's berth in accordance with Claim 2,
**characterised in that**,
the safety bracket (8) is angled in an L-shape in such a way that in the retaining position a free leg (10) of the safety bracket (8) is angled parallel to the surface (5) of the berth at right angles to a central longitudinal axis of the driver's cab.

4. A sleeper's berth in accordance with Claim 3,
**characterised in that**,
the L-shaped safety bracket (8) is formed of two legs (9,10) connected by an additional joint located at the point at which they cross by means of which the safety bracket (8) can be moved into an extended position.

5. A sleeper's berth in accordance with Claim 2,
**characterised in that**,
the safety bracket (8b) has a further free leg which extends parallel to the first free leg a short radial distance from the pivot point (6).

6. A sleeper's berth in accordance with Claim 5,
**characterised in that**,
the two free legs are connected to form closed frame by means of a cross strut.

7. A sleeper's berth in accordance with one of the preceding claims,
**characterised in that**,
the safety bracket (8, 8b) is fitted with padding.

8. A sleeper's berth in accordance with Claim 7,
**characterised in that**,
the safety bracket (8, 8b) is constructed with a tubular cross section which is sheathed in padding.

## Revendications

1. Couchette pour une cabine d'un véhicule utilitaire ou d'un camion, qui est disposée en arrière d'un siège (2) de conducteur et d'un siège (3) de passager dans la cabine et comporte, dans une partie avant, entre les sièges (2, 3) du conducteur et du passager, un dispositif de retenue de sécurité pivotant pour une personne située sur la couchette (4),
◆ caractérisée en ce que le dispositif de retenue de sécurité est agencé sous la forme d'un étrier de sécurité monobloc (8, 8b), qui est disposé de manière à pouvoir pivoter entre une position de retenue et une position de repos autour d'un axe de pivotement (6) parallèle à la surface (5) de la couchette, au moyen d'un palier de pivotement (7) situé sur la couchette (4) et fait saillie radialement par rapport à l'axe de pivotement (6) à partir du palier de pivotement (7), aussi bien dans la position de retenue que dans la position de repos.

2. Couchette selon la revendication 1, caractérisée en ce que le palier de pivotement est agencé sous la forme d'un palier à friction (7), qui comporte des butées d'extrémité pour la position de retenue et pour la position de repos de l'étrier de sécurité (8, 8b).

3. Couchette selon la revendication 2, caractérisée en ce que l'étrier de sécurité (8) est coudé avec une forme en L de sorte que, dans la position de retenue, une branche libre (10) de l'étrier de sécurité (8) est parallèle à la surface (5) de la couchette, transversalement par rapport à un axe médian longitudinal de la cabine.

4. Couchette selon la revendication 3, caractérisée en ce que l'étrier de sécurité (8) coudé en forme de L est formé par deux branches (9, 10), qui sont reliées entre elles au niveau de leur point de croisement, par l'intermédiaire d'une articulation supplémentaire, à l'aide de laquelle l'étrier de sécurité (8) peut être amené dans une position déployée.

5. Couchette selon la revendication 2, caractérisée en ce que l'étrier de sécurité (8b) comporte une autre branche libre, qui est orientée parallèlement à la première branche libre, à une distance radiale plus faible de l'axe de pivotement (6).

6. Couchette selon la revendication 5, caractérisée en ce que les deux branches libres sont reliées entre elles par une traverse pour former un cadre fermé.

7. Couchette selon l'une des revendications précédentes, caractérisée en ce que l'étrier de sécurité (8, 8b) est pourvu d'un rembourrage.

8. Couchette selon la revendication 7, caractérisée en ce que l'étrier de sécurité (8, 8b) est formé d'un profilé tubulaire, qui est enveloppé par le rembourrage.
